**Europäisches Patentamt**

(19) **European Patent Office**

**Office européen des brevets**

(11) Numéro de publication: **0 016 715**
**B1**

(12) **FASCICULE DE BREVET EUROPEEN**

(45) Date de publication du fascicule du brevet:
**20.07.83**

(51) Int. Cl.³: **F 16 L 13/14,** H 01 R 4/20,
H 02 G 15/18

(21) Numéro de dépôt: **80420031.9**

(22) Date de dépôt: **07.03.80**

(54) **Dispositif d'étanchéité et procédé d'assemblage étanche d'un manchon à un conducteur électrique isolé ou à un tuyau et son mode de fabrication.**

(30) Priorité: **09.03.79 FR 7906660**

(43) Date de publication de la demande:
**01.10.80 Bulletin 80/20**

(45) Mention de la délivrance du brevet:
**20.07.83 Bulletin 83/29**

(84) Etats contractants désignés:
**AT BE CH DE FR GB**

(56) Documents cités:
**DE-A-1 525 648**
**DE-A-1 945 362**
**DE-B-1 196 447**
**FR-A-582 415**
**FR-A-730 756**
**FR-A-1 240 073**
**FR-A-1 285 314**
**FR-A-2 321 087**
**FR-A-1 398 955**

(73) Titulaire: **Mosettig, Jean, 3 chemin des Verzières,
F-69110 Ste-Foy-les-Lyon (FR)**

(72) Inventeur: **Mosettig, Jean, 3 chemin des Verzières,
F-69110 Ste-Foy-les-Lyon (FR)**

# Dispositif d'étanchéité et procédé d'assemblage étanche d'un manchon à un conducteur électrique isolé ou à un tuyau et son mode de fabrication

La présente invention se rapporte à un dispositif d'étanchéité tel que défini dans le préambule de la revendication 1.

Les dispositifs d'étanchéité de jonction permettent de réunir de façon permanente deux conduits de fluide, de gaz ou de conducteurs électriques à l'aide d'un manchon ou tube déformé par compression ou serti. L'étanchéité obtenue évite dans le cas de canalisations les fuites de fluide ou de gaz à l'extérieur; dans le cas de conducteurs électriques la pénétration extérieure à l'intérieur de la jonction de fluide, de gaz ou de courant électrique.

On connaît des dispositifs du genre en question comprenant deux viroles en matière plastique disposées à l'intérieur d'un manchon métallique (DE-A-1 945 362). Mais de tels dispositifs ne peuvent pas réaliser l'étanchéité parfaite au niveau de leurs extrémités et en particulier ils ne peuvent pas être utilisés pour abouter deux conducteurs électriques en assurant l'étanchéité par rapport à l'isolement des deux bouts en vis-à-vis.

Il a aussi été décrit des dispositifs mettant en œuvre la compression d'un élément plastique intercalaire entre le manchon et les tubes à jonctionner et étancher ou entre le manchon à raccorder aux conducteurs à assembler, l'élément plastique ou plasto-élastique intercalaire réalisant l'étanchéité entre le manchon et les conducteurs ou les tuyaux à raccorder (DE-A-1 525 648).

Les dispositifs antérieurs ont l'inconvénient de diminuer la profondeur de pénétration suffisante dans la paroi du tuyau et/ou de diminuer la déformation mécanique nécessaire à la tenue de la charge de rupture de la jonction des conducteurs électriques.

En outre, la fabrication de ces dispositifs nécessite une opération supplémentaire pour l'introduction de l'intercalaire à l'intérieur du corps du manchon, d'où un coût de fabrication supplémentaire.

Ces inconvénients sont éliminés par le dispositif suivant l'invention qui fait l'objet de la partie caractérisante de la revendication 1. Le dispositif suivant l'invention est constitué par un élément plastique recouvrant le manchon et dont le module d'élasticité est inférieur à celui du manchon. Cet élément plastique placé sur le manchon peut être en prise ou non avec la paroi de ce manchon. Les joints d'étanchéité plus souples étant disposés aux extrémités dans le sens axial de l'élément plastique recouvrant le manchon sont fixés de façon à recouvrir simultanément l'extrémité de la paroi extérieure et intérieure de l'élément plastique de sorte que, lorsque la partie métallique dénudée d'un conducteur électrique est introduite dans le manchon métallique et que l'isolant de ce conducteur vient en butée contre le joint d'étanchéité, il y ait compression axiale de l'élément plastique sur le joint d'étanchéité après que l'élément plastique sous l'effet d'une compression radiale se soit déformé. L'allongement permanent de l'élément élastique comprime par recouvrement total ou non le joint d'étanchéité sur l'isolant du conducteur, l'allongement étant aussi provoqué par l'apport de matière provenant de la réduction de l'épaisseur au niveau de la compression. Le dispositif suivant l'invention peut donc être utilisé avec avantage pour accorder entre eux, deux conducteurs électriques isolés. Dans le cas de raccordement de tuyaux, il sera avantageux d'installer sur les tuyaux des butées tubulaires placées près des joints d'étanchéité venant en butée par compression contre les butées fixes tubulaires du tuyau au moment de la compression radiale de l'élément élastique.

La description qui va suivre, faite en référence aux dessins annexés qui sont donnés à titre d'exemples non limitatifs, fera mieux comprendre comment l'invention peut être réalisée.

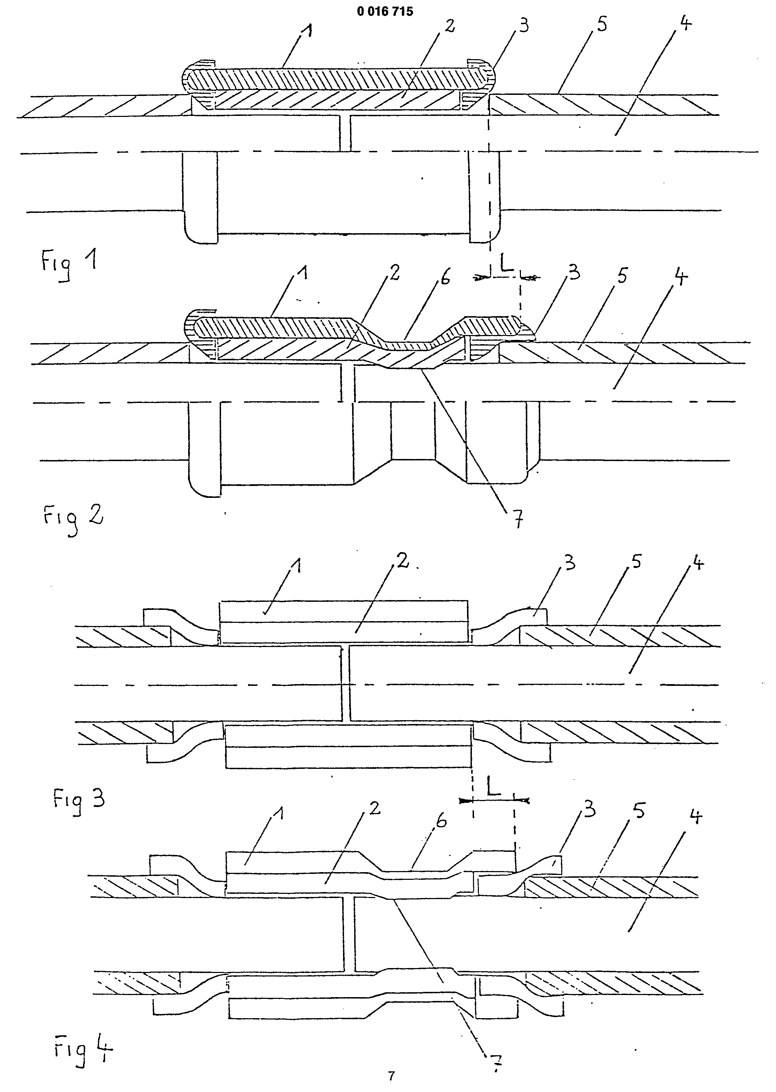

La fig. 1 représente partiellement en coupe un manchon tubulaire métallique 2 introduit dans un élément plastique 1 aux extrémités duquel ont été fixées des rondelles 3 en forme de cuvette plus souple que l'élément 1. A l'intérieur du dispositif est introduit un conducteur électrique dénudé 4 de façon à ce que l'isolant 5 vienne en butée contre la rondelle ou joint d'étanchéité 3.

La fig. 2 représente le même dispositif qui a reçu une compression 6 à l'aide d'un outillage approprié, c'est-à-dire par exemple une pince à sertir. Après la compression simultanée de l'élément plastique 1 et du manchon 2, l'épaisseur de l'élément 1 a diminué sous l'effort de la force de pression 6. Il apparaît des forces axiales parallèles aux conducteurs électriques; ces forces provoquent le déplacement d'une partie de la matière de l'élément 1, ce déplacement provoquant l'allongement L de l'élément plastique 1 – La rondelle 3 bloquée en butée par l'isolant 5 du conducteur, est rabattue par l'élément 1 sur l'isolant 5 du conducteur électrique, l'élément 1 tend à comprimer radialement sur l'isolant 5 la rondelle 3 et à constituer ainsi l'étanchéité du dispositif, le conducteur 4 étant maintenu à l'intérieur du manchon 2 par la déformation 7 du manchon.

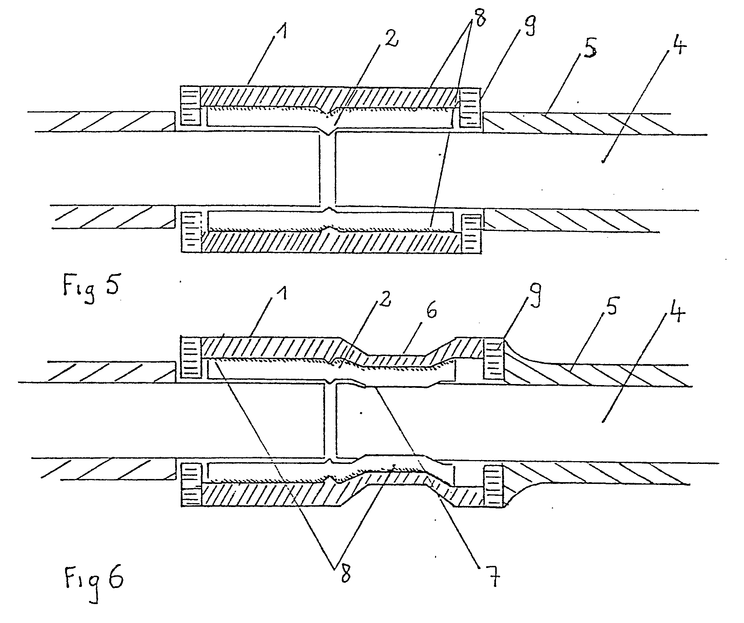

Les figs 3 et 4 représentent le dispositif comprenant un joint tubulaire placé à cheval sur l'extrémité de l'isolant 5 et l'âme 4 du conducteur. L'élément 1, après avoir subi la compression 6, subit en son extrémité un mouvement provoquant l'allongement L permettant à l'extrémité de l'élément plastique 1 de comprimer la rondelle tubulaire 3.

Les figs 5 et 6 représentent le dispositif comportant un manchon 2 sur lequel la surface extérieure est aménagée de façon à obtenir un état de surface 8 présentant des aspérités ou rugosités, l'état de surface 8 ayant pour but d'augmenter les forces radiales de pression 6 et 7 et diminuer l'allongement L, l'élément 1 étant partiellement en prise avec le manchon 2.

Dans le cas contraire où l'on veut obtenir un allongement L maximum de l'élément 1 et une déformation 6 et 7 minimum de l'élément et du manchon, l'état de surface 8 du manchon 2 sera lubrifié ou poli de façon à obtenir le maximum de glissement de l'élément 1 sur le manchon 2, ainsi une partie des forces de compression sont mieux déviées dans l'axe de l'élément 1 et augmentent la force de pression de l'extrémité de 1 sur le joint 3.

Il ressort de ce qui précède que l'on peut modifier le joint d'étanchéité de façon très diverse tout en restant dans le domaine de l'invention. Le joint d'étanchéité 3 peut être supprimé à condition d'aménager en extrémité sur l'élément plastique 1, une bague intérieure 9 ou une collerette 9 solidaire de l'élément 1 et qui viendra s'appuyer contre l'isolant 5 du conducteur au moment de la pression exercée en 6 voir figs 5 et 6.

A titre d'exemples non limitatifs, les essais sur divers matériaux ont donné les résultats suivants: figs 1, 2, 3, 4: un manchon en cuivre écroui ½ dur de diamètre extérieur 5 mm intérieur 2,6 mm longueur 62 mm est introduit dans un élément plastique d'épaisseur 1 mm en polycarbonate, en extrémité de l'élément plastique sont fixés des joints d'étanchéité en caoutchouc venant buter contre l'isolant du fil de cuivre de diamètre 2,5 mm écroui $^4/_4$ dur dont la partie dénudée est introduite dans le dispositif suivant l'invention. Après avoir exercé à six reprises, suivant un déplacement transversal en partant du centre du dispositif vers l'extrémité, soit 3 fois sur chaque moitié du corps, une compression radiale au moyen d'une pince à sertir à rétreint de forme hexagonale dont la largeur d'empreinte est de 6 mm, il a été constaté dans le cas où la surface extérieure du manchon présente une surface non lisse, par grenaillage, en prise partielle avec la paroi intérieure du tube plastique: avec une force de compression radiale de $25 \cdot 10^3$ N, charge de rupture du fil en traction au niveau du manchon $1,95 \cdot 10^3$ N pour un fil possédant une tenue en charge maximum de $2,04 \cdot 10^3$ N allongement de l'élément plastique 7 mm, soit 10% par rapport à la longueur totale, tenue en pression d'étanchéité 90 N.

Dans le cas où la surface extérieure du manchon est lisse et qu'un lubrifiant, par exemple une graisse ou silicone, a été déposé entre l'élément plastique et le manchon, la valeur de la tenue en traction du fil au niveau du manchon n'est plus que de $1,1 \cdot 10^3$ N force, l'allongement de l'élément plastique est de 30% soit environ 18 mm, la tenue en pression à l'étanchéité à l'air est de 180 N/cm². Nous constatons dans ce dernier exemple que, par rapport à l'exemple précédent, une plus grande partie des forces de compression à l'écrasement du dispositif ont été déviées axialement et ont servi à comprimer le joint d'étanchéité sur l'isolant du fil, et ceci, conformément à la présente invention. Bien entendu, il est nécessaire que, suivant l'invention, le module d'élasticité de l'élément déformé soit inférieur au module d'élasticité du manchon qu'il recouvre, soit dans le cas de l'exemple précédent $80 \cdot 10^5$ N/cm² pour le polycarbonate armé fibre de verre et $115 \cdot 10^5$ N/cm² pour le cuivre.

Conformément à la présente invention, le module de fabrication nécessite l'emploi d'un procédé par extrusion permettant de recouvrir par co-extrusion d'une barre défilant en continu devant une tête d'équerre d'extrusion, cette barre métallique ou plastique constituant le corps du manchon sera lubrifiée en continu ou suivant l'application, grenaillée ou sablée ou encore, elle sera imprimée à l'aide de mollettes, des aspérités de surface permettant à l'élément de module d'élasticité inférieur recouvrant par co-extrusion la barre, d'être en prise ou au contraire libre par rapport à celle-ci. Bien entendu, lors de l'opération, les éléments seront portés à température voulue en vue d'éviter les contraintes au moment du refroidissement. A titre d'indication, dans le cas du cuivre du précédent exemple, le tube de cuivre étant préchauffé en continu à 90 °C est gainé de polycarbonate à 270 °C et refroidi dans un premier temps à 100 °C puis à température ambiante.

La barre recouverte de son élément plastique sera tronçonnée en longueur désirée, le dispositif constitué de son élément 1 et de son manchon 2 de même longueur recevra, en sa partie centrale, une première compression de la largeur suffisante d'une empreinte de façon à faire dépasser en extrémité par déformation, l'élément 1 par rapport au manchon 2, ce qui nous permettra d'obtenir simultanément un logement en extrémité pour les joints d'étanchéité et une butée centrale interne au manchon pour les conducteurs ou tuyaux. Cette opération de poinçonnage peut s'exécuter en continu ou en reprise.

La présente invention ne se limite pas aux types d'application précédemment cités ni à la matière. Un métal de module d'élasticité inférieur à celui qu'il recouvre pourra être employé par exemple, utilisation de l'aluminium recuit sur un manchon d'acier.

## Revendications

1. Dispositif d'étanchéité à sertir, formant raccord, utilisé pour raccorder deux conducteurs électriques ou deux tuyaux (4), constitué d'un manchon (2) et d'éléments souples d'étanchéité (1, 3) mis en place après que le manchon (2) et lesdits éléments d'étanchéité aient subi une ou plusieurs compressions à l'aide d'un outil approprié, caractérisé en ce qu'il est constitué d'un manchon (2) préalablement recouvert d'un élément (1) plastique de module d'élasticité inférieur à celui du manchon (2) et pouvant s'allonger dans le sens axial des conducteurs ou des tuyaux (4) au moment d'une compression radiale, et en ce que des rondelles (3) plus souples que l'élément (1) servent à l'étanchéité entre le dispositif et les conducteurs ou les tuyaux (4) à abouter après la compression radiale de l'élément et du manchon.

2. Dispositif selon la revendication 1, caractérisé en ce que la nature de l'état de surface extérieure (8) de la paroi du manchon (2) est aménagée de façon à présenter un état de rugosité à l'aide d'aspérités permettant de freiner le déplacement.

3. Dispositif selon la revendication 1, caractérisé en ce que la surface extérieure (8) du manchon (2) est aménagée de façon à présenter une surface lisse ou lubrifiée afin d'aider le déplacement de l'élément (1) en un meilleur allongement.

4. Dispositif selon l'une quelconque des revendications 1 à 3, caractérisé en ce que l'état de surface extérieure (8) du manchon (2) peut être réalisé alternativement au moyen de zones rugueuses et lisses de façon à obtenir au moment du sertissage du dispositif, une bonne pénétration du manchon (2) sur les conducteurs ou les tuyaux et un bon allongement de l'élément 1.

5. Dispositif selon la revendication 1, caractérisé en ce que l'élément (1) est réalisé en une matière plastique telle qu'un polycarbonate armé de fibres de verre, le manchon (2) étant réalisé en cuivre écroui.

6. Dispositif selon la revendication 1, caractérisé en ce que l'élément (1) est réalisé en un métal tel que l'aluminium recuit, le manchon (2) étant prévu en acier.

7. Procédé pour fabriquer un dispositif selon les revendications 1 à 5, caractérisé en ce qu'une barre défilant en continu entre un système de molettes à gorge, placées face à face, permettant l'impression sur la barre sur tout son pourtour d'un état de surface lisse ou rugueux, en ce que cette barre est ensuite gainée par co-extrusion en continu pour être recouverte de l'élément plastique (1), en ce que cette barre gainée est ensuite tronçonnée à longueur désirée, et puis recevra en sa partie centrale une pression radiale de façon à créer d'une part en extrémité du dispositif une cavité entre l'élément (1) et le manchon (2) de façon à placer en reprise les rondelles cuvettes d'étanchéité (3) – ou à créer alternativement aux extrémités du dispositif un renforcement pour placer une bague intérieure solidaire (9) s'appuyant contre l'isolement (5) – et à créer d'autre part une déformation centrale du dispositif servant de butée intérieure pour les conducteurs ou les tuyaux à étancher.

## Claims

1. A notched type sealing device, making a pipe coupling, used to connect two conducting wires or two pipes (4), composed of a sleeve (2) and flexible sealing elements (1, 3) which are set after one or several compressions are applied onto the sleeve (2) and the said sealing elements by means of an adequate tool, this device characteristics being as follows: it is composed of a sleeve (2) which was previously coated with a plastic element the Young's modulus of which is lower than that of the sleeve (2) and which can be expanded in the axial direction of the conducting wires or pipes (4) when a radial compression is being applied; and of washers (3) which are more flexible than the element (1) and ensure a sealed construction between the device and the conducting wires or pipes (4) to be butt-jointed, once the element and the sleeve have been radially compressed.

2. Device according to claim 1, characterized by the exterior surface condition (8) of the sleeve wall (2) being fitted so as to present such a rough surface that the stretch is reduced.

3. Device according to claim 1, characterized by the exterior surface (8) of the sleeve (2) being fitted so as to present a plain or lubricated surface in order to procure that the element movement (1) should result in a better stretch.

4. Device according to any claim from 1 to 3, characterized by the exterior surface condition (8) of the sleeve (2) likely to be realized alternatively with rough and plain areas so that, when crimping the device, the sleeve (2) fits correctly onto the conducting wires or pipes and that the element 1 is properly expanded.

5. Device according to claim 1, characterized by the element (1) being made of plastic such as glass fiber reinforced polycarbonate, the sleeve (2) being realized in hard-drawn copper.

6. Device according to claim 1, characterized by the element (1) being made of a metal such as annealed aluminium, the sleeve (2) being available in steel.

7. Process for making a device according to claims 1 to 5, characterized by a bar continuously running off between a grooved wheel device, these grooves being set face to face, and allowing a plain or rough surface finish to be impressed all along the bar periphery, this bar being coated then by a continuous co-extrusion so as to be covered with the plastic element (1), this coated bar being cut off then at the required length, a radial pressure being finally applied to the central part of the bar in order to create on the one hand a cavity between the element (1) and the sleeve (2) at the end of the device so as to put the dished sealing washers (3) in a successive stage – or to alternatively create a reinforcement at the device ends for putting an attached internal ring (9) resting on the insulation (5) – and on the other hand to create a central deformation of the device acting as an internal stop for the conducting wires or pipes to be sealed.

## Patentansprüche

1. Dichtungsvorrichtung zum Einsetzen als Verbindungsstück, um zwei elektrische Leitungen oder zwei Röhren (4) zu verbinden, bestehend aus einer Muffe (2) und biegsamen Dichtungsteilen (1, 3), die eingesetzt werden, nachdem die Muffe (2) und die betreffenden Dichtungteile einer oder mehreren Kompressionen mittels eines geeigneten Werkzeugs ausgesetzt worden sind, dadurch gekennzeichnet, dass es aus einer Muffe (2) besteht, welche vorher mit einem plastischen Teil (1) von geringerem Elastizitätsmodul als dasjenige der Muffe (2) bedeckt worden ist und sich in axialer Richtung zu den Leitungen oder Röhren (4) bei einer radialen Kompression verlängern kann, und dadurch gekennzeichnet, dass biegsamere Dichtungsscheiben (3) als das Teil (1) zur Abdichtung zwischen der Vorrichtung und den zusammenzufügenden Leitungen oder Röhren (4) nach radialer Kompression des Teils und der Muffe dienen.

2. Vorrichtung nach Anspruch 1, dadurch gekennzeichnet, dass die Art des Zustands der äusseren Oberfläche (8) der Muffenwand (2) so gebildet ist, dass dieselbe eine Rauhigkeit durch Unebenheiten aufweist, welche ein Verschieben hemmen.

3. Vorrichtung gemäss Anspruch 1, dadurch gekennzeichnet, dass die Art des Zustands der äusseren Oberfläche (8) der Muffe (2) so gebildet ist, dass dieselbe eine glatte oder geölte Oberfläche aufweist, um das Verschieben des Teils (1) für eine bessere Verlängerung zu erleichtern.

4. Vorrichtung nach einem der Ansprüche 1 bis 3, dadurch gekennzeichnet, dass der Zustand der äusseren Oberfläche (8) der Muffe (2) abwechselnd mit rauhen oder glatten Zonen ausgeführt werden kann, so dass beim Einsetzen der Vorrichtung ein gutes Eindringen der Muffe (2) auf die Leitungen oder die Röhren und eine richtige Verlängerung des Teils 1 erzielt wird.

5. Vorrichtung nach Anspruch 1, dadurch gekennzeichnet, dass das Teil (1) in einem Kunststoff wie ein mit Glasfasern verstärktes Polykarbonat ausgeführt wird, wobei die Muffe (2) aus kaltgeschmiedetem Kupfer besteht.

6. Vorrichtung nach Anspruch 1, dadurch gekennzeichnet, dass das Teil (1) in einem Metall wie geglühtes Aluminium ausgeführt wird, wobei die Muffe (2) aus Stahl vorgesehen ist.

7. Verfahren zur Herstellung einer Vorrichtung nach den Ansprüchen 1 bis 5, dadurch gekennzeichnet, dass eine Stange stufenlos zwischen einem System von gegenüberliegenden gerillten Rädchen durchläuft, welches erlaubt, auf die Stange auf ihrem ganzen Umfang eine glatte oder rauhe Oberfläche aufzudrücken, dadurch dass diese Stange sodann durch gleichzeitiges stufenloses Extrudieren eingehülst wird, um mit dem Kunststoffteil (1) überzogen zu werden, dadurch dass diese eingehülste Stange in der gewünschten Länge gestückelt wird und dann in ihrem mittleren Teil einen radialen Druck erhält, so dass einerseits am Ende der Vorrichtung eine Vertiefung zwischen dem Teil (1) und der Muffe (2) geschaffen wird, um die Dichtungsscheiben (3) einzusetzen, – oder wahlweise an den Enden der Vorrichtung eine Verstärkung geschaffen wird, um einen formschlüssigen Innenring (9) einzusetzen, welcher sich auf die Isolierung (5) stützt – und dass anderseits eine zentrale Verformung der Vorrichtung geschaffen wird, welche als innerer Anschlag für die abzudichtenden Leitungen oder Röhren dient.

0 016 715

Fig 1

Fig 2

Fig 3

Fig 4

Fig 5

Fig 6